# EUROPEAN PATENT APPLICATION

(11) **EP 1 568 732 A1**
(43) Date of publication of application: **31.08.2005**
(21) Application number: 03774057.8
(22) Date of filing: 19.11.2003
(51) Int. Cl.: C08K 9/06, C08L 101/00, C08F 2/44

(54) **FINE COMPOSITE PARTICLE AND PROCESS FOR PRODUCING THE SAME**

(30) Priority: 19.11.2002 JP 2002334598
(71) Applicant: Asahi Glass Company, Limited, Chiyoda-ku, Tokyo 100-8405 (JP)
(72) Inventor: SUGIYAMA, Norihide, Asahi Glass Company, Limited, Yokohama-shi, Kanagawa 221-8755 (JP)
(74) Representative: Müller-Boré & Partner Patentanwälte
(86) International application number: PCT/JP2003/014744
(87) International publication number: WO 2004/046237

(57) **Abstract**

Fine core/shell composite particles comprising fine inorganic nanometer-size particles as cores and a fluoropolymer having units derived from a fluoromonomer as shells, their production method and their application are provided.

The fine composite particles of the present invention are fine composite particles comprising fine inorganic nanometer-size particles, the surface of which is covered with a fluoropolymer having units derived from a fluoromonomer, wherein the proportion of the fine inorganic particles is from 1 to 90 mass%, and the fluoropolymer is a fluoropolymer having units derived from a fluoromonomer having a polymerizable unsaturated group in which a carbon atom has a fluorine atom bonded thereto. The method for producing fine composite particles of the present invention is a method for producing the above fine composite particles, which comprises polymerizing the above fluoromonomer by seed polymerization in a polymerization system wherein fine inorganic nanometer-size particles are dispersed in an aqueous medium in the presence of a surfactant.

A powder comprising the above fine composite particles is useful as a bulking agent to be blended with a thermoplastic polymer or a thermosetting resin, and a thermoplastic polymer or a thermosetting resin containing the fine composite particles is used as a molding material. Further, a powder of the fine composite particles in which the proportion of the fine inorganic particles is low can be used by itself as a molding material.

## Description

### TECHNICAL FIELD

The present invention relates to fine composite particles comprising fine inorganic particles, the surface of which is covered with a specific fluoropolymer, a method for producing the fine composite particles and their application.

### BACKGROUND ART

The physical properties of an organic polymer can be improved by blending a powder of fine inorganic particles therewith. For example, fine particulate silica may be blended for the purpose of e.g. decreasing the coefficient of thermal expansion, improving heat resistance, improving mechanical strength and improving hardness of an organic polymer. It is considered necessary to uniformly blend fine inorganic particles with an organic polymer and to improve the affinity of fine inorganic particles for an organic polymer, so as to efficiently improve such physical properties by blending fine inorganic particles in a small amount thereby to prevent decrease of other physical properties by blending a large amount.

Fine inorganic particles are likely to aggregate and are hardly monodispersed uniformly in an organic polymer. Further, the surface of fine inorganic particles is usually hydrophilic, and has a low affinity with an organic polymer which is usually hydrophobic. Accordingly, a means of preliminarily subjecting fine inorganic particles to surface treatment with e.g. a coupling agent and blending the surface-treated fine inorganic particles with an organic polymer. However, by this means, it is difficult to sufficiently prevent aggregation of fine inorganic particles when they are extremely fine, and the effect of the surface treatment is likely to decrease due to mechanical and thermal impact when they are blended with an organic polymer.

As a means to prevent aggregation of fine inorganic particles and to improve the affinity with an organic polymer, it has been known to cover the surface of fine inorganic particles with an organic polymer. As a method of covering the surface of fine inorganic particles with an organic polymer to produce fine covered particles in a monodisperse state, a mechanical covering method, a covering method by seed polymerization employing fine inorganic particles as seeds, and the like have been known. As an example of the mechanical covering method, a method of covering the surface of fine silica particles with a fluoropolymer has been known (e.g. JP-A-7-43728). However, it is difficult to cover the fine inorganic particles by this method when they are extremely fine.

It has been known to produce fine core/shell composite particles comprising fine inorganic particles as cores and an organic polymer as shells, by the seed polymerization method (e.g. JP-A-9-194208 and JP-A-2001-98164). However, it has not been known to produce fine core/shell composite particles comprising a fluoropolymer having a high fluorine content as shells by this method.

A fluoropolymer having a high fluorine content is an organic polymer having extremely high hydrophobicity, and a fluoromonomer as a material thereof is also a monomer having high hydrophobicity. Accordingly, it is difficult to produce favorable fine core/shell composite particles only by applying the above known seed polymerization method. Particularly when a fluoromonomer having a polymerizable unsaturated group in which a carbon atom has a fluorine atom bonded thereto, is used as a fluoromonomer, fine core/shell composite particles comprising a fluoropolymer as shells can not be produced by a known seed polymerization method.

### DISCLOSURE OF THE INVENTION

It is an object of the present invention to provide fine composite particles comprising fine inorganic nanometer-size particles, the surface of which is covered with a fluoropolymer having a high fluorine content, a method for producing the fine composite particles by a seed polymerization method, and an application of the fine composite particles.

The present invention provides the following fine composite particles comprising fine inorganic nanometer-size particles, the surface of which is covered with a specific fluoropolymer, method for producing them, molding material containing the fine composite particles and molded product obtained from the molding material.

Fine composite particles comprising fine inorganic nanometer-size particles, the surface of which is covered with a fluoropolymer (A), wherein the fluoropolymer (A) is a fluoropolymer having units derived from a fluoromonomer having a polymerizable unsaturated group in which a carbon atom has a fluorine atom bonded thereto, and the proportion of the fine inorganic particles in the fine composite particles is from 1 to 90 mass%.

A method for producing fine composite particles comprising fine inorganic nanometer-size particles, the surface of which is covered with the following fluoropolymer (A), which comprises polymerizing a fluoromonomer by seed polymerization in a polymerization system wherein fine inorganic nanometer-size particles are dispersed in an aqueous medium in the presence of a surfactant:
fluoropolymer (A): a fluoropolymer having units derived from a fluoromonomer having a polymerizable unsaturated group in which a carbon atom has a fluorine atom bonded thereto.

A molding material containing a powder of the above fine composite particles.

A molded product formed by molding the above molding material.

### BEST MODE FOR CARRYING OUT THE INVENTION

The fine composite particles of the present invention are fine core/shell composite particles, the cores comprise fine inorganic nanometer-size particles, and the shells comprise a fluoropolymer (A).

The fine inorganic nanometer-size particles in the present invention mean fine particles, the size of which is represented by nanometer (nm) and the material of which is an inorganic substance. The shape of the fine particles is not particularly limited so long as the shape is spherical or close to spherical (hereinafter they will be referred to as particulate), and the shape may, for example, be spherical, polyhedral, amorphous aggregate or elliptical. As the size of the nanometer-size particles, when the shape is spherical or close to spherical, the diameter is at most 100 nm, particularly preferably from 0.5 to 50 nm. In a case of other shapes, the particles are preferably particulate particles having a volume of at most the volume of spheres with a diameter of 100 nm, particularly preferably particulate particles having a volume of at most the volume of spheres with a diameter of from 0.5 to 50 nm. The volume means an apparent volume, and in a case of porous particles, it is a volume considering them as solid particles with no pores.

The material of the fine inorganic nanometer-size particles of the present invention is not particularly limited so long as it is an inorganic substance. It may, for example, be a metal oxide, carbon, a metal, a metal carbide, a metal nitride, a metal silicate, a metal titanate, a metal borate or a metal halide. Specifically, it may, for example, be silica, alumina, titania, zirconia, tin oxide, indium oxide, zinc oxide, iron oxide, cerium oxide, silver, copper, barium titanate, lead titanate, silicon carbide, silicon nitride or magnesium fluoride. It is preferably a metal oxide such as silica or zirconia, carbon, a metal, a metal silicate or a metal titanate.

The fine nanometer-size particles made of the above material may, for example, be fine metal oxide particles of e.g. colloidal silica, colloidal titania, colloidal zirconia, colloidal ITO (tin doped indium oxide) or colloidal zinc oxide, or a colloidal metal such as silver colloid or copper colloid.

To produce the fine composite particles of the present invention, it is preferred to use a dispersion of fine inorganic particles in a liquid medium as a raw material. The liquid medium is preferably water or an organic solvent. The organic solvent may, for example, be an alcohol such as methanol, ethanol or isopropanol or a liquid hydrocarbon such as benzene, toluene or hexane. It is preferred to produce the fine composite particles of the present invention by using fine inorganic particles dispersed in a liquid medium as a raw material and covering the surface of the fine inorganic particles with a fluoropolymer (A) in the liquid medium. As the raw material, a commercial dispersion of fine inorganic particles in a liquid medium can be used. Further, the dispersion of fine inorganic particles in a liquid medium can be produced by a known or well-known method such as a sol-gel process. The dispersion of fine inorganic particles in a liquid medium is preferably a dispersion having sufficient dispersion stability, in which fine inorganic particles are monodispersed.

The fluoropolymer (A) in the present invention is a fluoropolymer having units derived from a fluoromonomer having a polymerizable unsaturated group in which a carbon atom has a fluorine atom bonded thereto. It is required that the fluoromonomer has a polymerizable unsaturated group in which at least one of two carbon atoms has at least one fluorine atom bonded thereto. The fluoromonomer may have two or more polymerizable unsaturated groups, and in such a case, it is required that at least one polymerizable unsaturated group of the two or more polymerizable unsaturated groups is the above polymerizable unsaturated group having a fluorine atom. The fluoromonomer is preferably a monomer having one polymerizable unsaturated group (hereinafter sometimes referred to as monoene) or a monomer having two polymerizable unsaturated groups (hereinafter sometimes referred to as diene). In the case of a crosslinkable fluoromonomer as described hereinafter, a monomer having three of more polymerizable unsaturated groups (hereinafter sometimes referred to as polyene) may be used, however, the crosslinkable fluoromonomer is preferably a fluorinated diene. In the present invention, there are two types of fluorinated dienes, i.e. a crosslinkable fluorinated diene and a non-crosslinkable fluorinated diene, and the latter is a monomer capable of forming a linear polymer by cyclopolymerization (hereinafter referred to as cyclopolymerizable). The fluorinated polyene is usually crosslinkable.

The fluoromonomer in the present invention is preferably a fluoromonomer having a polymerizable unsaturated group represented by CF₂=C< or -CF=CR-(wherein R represents a fluorine atom, a fluoroalkyl group or a fluoroalkoxy group). A fluorinated monoene is a compound having one of such polymerizable unsaturated groups. A fluorinated diene and a fluorinated polyene have at least one of such polymerizable unsaturated groups, and other polymerizable unsaturated group may be a polymerizable unsaturated group other than such polymerizable unsaturated groups. Preferably, the fluorinated diene and the fluorinated polyene have two, or three or more such polymerizable unsaturated groups.

In the present invention, the fluoromonomer is preferably a fluoromonomer having a high fluorine content. The number of fluorine atoms is preferably at least 75%, particularly preferably at least 80%, to the total number of fluorine atoms and hydrogen atoms bonded to carbon atoms in the fluoromonomer. The fluoromonomer is most preferably a fluoromonomer having substantially no hydrogen atoms bonded to carbon atoms. Hereinafter, a fluoromonomer having substantially no hydrogen atoms bonded to carbon atoms will be referred to as a perfluoromonomer. Part of fluorine atoms bonded to carbon atoms in the perfluoromonomer may be substituted by chlorine atoms. In a case of a perfluoromonomer having chlorine atoms, the number of chlorine atoms is preferably at most 25%, particularly preferably at most 20%, to the total number of fluorine atoms and chlorine atoms in the perfluoromonomer. The perfluoromonomer is most preferably a perfluoromonomer having substantially no chlorine atoms bonded to carbon atoms.

The fluoropolymer (A) in the present invention may, for example, be a homopolymer of the fluoromonomer, a copolymer of two or more types of the fluoromonomers, or a copolymer of one or more types of the fluoromonomers and one or more types of monomers other than the fluoromonomer. The fluoropolymer (A) having a high fluorine content is preferably a homopolymer of the fluoromonomer or a copolymer of two or more types of the fluoromonomers, and it is preferred that substantially no monomer having no fluorine atoms is used as a comonomer. The fluoropolymer (A) in the present invention is preferably a fluoropolymer obtained by polymerizing monomers having a perfluoromonomer content of at least 50 mol%, particularly preferably at least 75 mol%, to the entire monomers. It is particularly preferably a fluoropolymer obtained by polymerizing monomers substantially consisting of a perfluoromonomer (hereinafter sometimes referred to as perfluoropolymer).

The fluoropolymer (A) in the present invention is preferably a fluoropolymer having a high fluorine content. The fluorine content of the fluoropolymer (A) is preferably at least 30 mass%, particularly preferably from 50 to 76 mass%.

The shells of the fine core/shell composite particles of the present invention comprise the fluoropolymer (A), and the shells may comprise the fluoropolymer (A) having a multi-layer structure (that is, they may comprise two or more layers of the fluoropolymer (A)). It is preferred that at least part of the fluoropolymer (A) is a crosslinked fluoropolymer, and when the shells consist of only one layer, the fluoropolymer (A) is preferably a crosslinked fluoropolymer. In a case where the shells consist of two or more layers of the fluoropolymer (A), it is preferred that at least inner layer (the layer which is in contact with the surface of the fine inorganic particles) comprises a crosslinked fluoropolymer. The layer except the inner layer may comprise a non-crosslinked substantially linear fluoropolymer. Particularly when the shells are relatively thick, it is preferred that the shells consist of two or more layers, the inner layer is a layer of a crosslinked fluoropolymer, and the layer except the inner layer is a layer of a substantially linear fluoropolymer. Hereinafter, the substantially linear fluoropolymer (A) will be sometimes referred to as a fluoropolymer (A-1), and the crosslinked fluoropolymer (A) will be sometimes referred to as a fluoropolymer (A-2).

Further, in a case where the shells of the fine core/shell composite particles of the present invention consist of two or more polymer layers, part of the polymer layers may comprise a polymer other than the fluoropolymer (A). The polymer other than the fluoropolymer (A) may be a fluoropolymer other than the fluoropolymer (A). Even in such a case, the whole polymer layers as a whole preferably comprise polymers consisting mainly of the fluoropolymer (A), and the proportion of the fluoropolymer (A) to the polymers in the polymer layers as a whole is preferably at least 50 mass%, particularly preferably at least 80 mass%. Most preferably, the polymer layers are such that the entire polymers in the polymer layers comprise fluoropolymers, and the proportion of the fluoropolymer (A) to the entire polymers is at least 80 mass%.

The substantially linear fluoropolymer (A), i.e. the fluoropolymer (A-1) is preferably a homopolymer or a copolymer of a fluorinated monoene, a homopolymer or a copolymer of a cyclopolymerizable fluorinated diene, or a copolymer of a fluorinated monoene and a cyclopolymerizable fluorinated diene. The crosslinked fluoropolymer (A), i.e. the fluoropolymer (A-2) is preferably a copolymer obtained by copolymerizing a crosslinkable fluorinated diene together with a fluorinated monoene or a cyclopolymerizable fluorinated diene. In a case of producing the fluoropolymer (A-2), the amount of a crosslikable monomer such as a crosslinkable fluorinated diene is usually at most 50 mol%, preferably at most 20 mol%, to the entire monomers. If the amount of the crosslinkable monomer is too large, the fluoropolymer (A-2) may be fragile, and unreacted polymerizable unsaturated groups may remain, thus decreasing heat resistance of the polymer. The lower limit of the amount of the crosslinkable monomer is not particularly limited, but is preferably 0.1 mol%.

In the polymerizable unsaturated group of the fluoromonomer preferred for production of the fluoropolymer (A), R is preferably a fluorine atom, a perfluoroalkyl group having at most 4 carbon atoms or a perfluoroalkoxy group having at most 4 carbon atoms. The cyclopolymerizable fluorinated diene and the crosslinkable fluorinated diene are preferably compounds having two polymerizable unsaturated groups represented by CF₂=C<. Such fluoromonomers are preferably the following fluoromonomers (a) to (e). (a) to (d) are fluorinated monoenes.
(a) Fluorinated olefin
(b) Fluorinated methylene dioxolane monomer
(c) Fluorinated dioxole monomer
(d) Fluorinated vinyl ether monomer
(e) Cyclopolymerizable fluorinated diene

The fluoroolefin (a) is preferably a fluoroolefin having 2 to 4 carbon atoms, such as tetrafluoroethylene, trifluoroethylene, chlorotrifluoroethylene, vinylidene fluoride or hexafluoropropylene, and it is preferably a perfluoromomoner such as tetrafluoroethylene, chlorotrifluoroethylene or hexafluoropropylene.

The fluorinated methylene dioxolane monomer (b) is preferably a compound represented by the following formula (1), and the fluorinated dioxole monomer (c) is preferably a compound represented by the following formula (2):

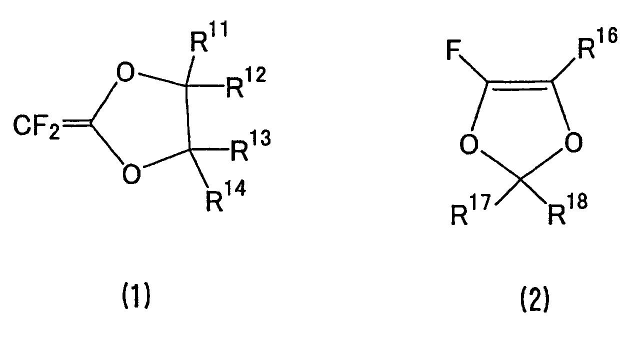

In the formulae (1) and (2), each of R¹¹ to R¹⁴ and R¹⁶ to R¹⁸ which are independent of one another, represents a fluorine atom, a fluoroalkyl group having at most 8 carbon atoms or a fluoroalkoxy group having at most 8 carbon atoms. In the formula (1), each of R¹¹ and R¹³ is preferably a fluorine atom, and each of R¹² and R¹⁴ which are independent of each other, is preferably a fluorine atom or a perfluoroalkyl group having from 1 to 4 carbon atoms. In the formula (2), R¹⁶ is preferably a fluorine atom, a perfluoroalkyl group having from 1 to 4 carbon atoms or a perfluoroalkoxy group having from 1 to 4 carbon atoms, and each of R¹⁷ and R¹⁸ which are independent of each other, is preferably a fluorine atom, or a perfluoroalkyl group having at most 6 carbon atoms.

The following compounds may be mentioned as specific examples of the fluorinated methylene dioxolane monomer (b) represented by the formula (1). Perfluoro(2-methylene-1,3-dioxolane), perfluoro(2-methylene-4-methyl-1,3-dioxolane), perfluoro(2-methylene-4-ethyl-1,3-dioxolane), perfluoro(2-methylene-4-n-propyl-1,3-dioxolane), perfluoro(2-methylene-4-n-butyl-1,3-dioxolane), perfluoro(2-methylene-4,5-dimethyl-1,3-dioxolane) and perfluoro(2-methylene-4,5-diethyl-1,3-dioxolane).

The following compounds may be mentioned as specific examples of the fluorinated dioxole monomer (c) represented by the formula (2). Perfluoro(2,2-dimethyl-1,3-dioxole), perfluoro-1,3-dioxole, perfluoro(2-methyl-1,3-dioxole), perfluoro(2-ethyl-1,3-dioxole), perfluoro(2-n-propyl-1,3-dioxole), perfluoro(2-n-butyl-1,3-dioxole), perfluoro(2-n-pentyl-1,3-dioxole) and perfluoro(4-methoxy-1,3-dioxole).

The fluorinated vinyl ether monomer (d) is preferably a compound represented by the following formula (3):

CF₂=CFO-R²¹ (3)

R²¹ represents a fluoroalkyl group which has at most 16 carbon atoms, and which may have an etheric oxygen atom between carbon atoms, a fluorocycloalkyl group which has from 4 to 8 carbon atoms in the ring, which may have a substituent such as a fluoroalkyl group in the ring, and which has at most 16 carbon atoms in total, the above fluoroalkyl group substituted by the fluorocycloalkyl group, or a -R²²-X group (wherein R²² represents a fluoroalkylene group having at most 16 carbon atoms, which may have an etheric oxygen atom between carbon atoms, and X represents a functional group). R²¹ is preferably a perfluoroalkyl group having at most 8 carbon atoms, which may have an etheric oxygen atom between carbon atoms, a fluorocycloalkyl group which has 5 or 6 carbon atoms in the ring, which may have a perfluoroalkyl group having at most 4 carbon atoms in the ring, and which has at most 10 carbon atoms in total, or a -R²³-YX' group (wherein R²³ represents a perfluoroalkylene group having at most 8 carbon atoms, which may have an etheric oxygen atom between carbon atoms, Y represents a single bond or an alkylene group having from 1 to 4 carbon atoms, and X' represents -SO₂F, -COOR²⁶, -CN, -NH₂, or -SiR²⁷ₘ(OR²⁸)₃₋ₘ, wherein R²⁶ represents a hydrogen atom or an alkyl group having at most 4 carbon atoms, R²⁷ represents an alkyl group having at most 4 carbon atoms, R²⁸ represents an alkyl group having at most 4 carbon atoms or an alkoxyalkyl group, and m represents an integer of from 0 to 2). R²¹ is particularly preferably a perfluoroalkyl group having at most 6 carbon atoms or a - R²⁴-X' group wherein R²⁴ represents a perfluoroalkylene group having at most 6 carbon atoms, which may have an etheric oxygen atom between carbon atoms, and X' in this case represents -SO₂F or -COOR²⁶.

The cyclopolymerizable fluorinated diene (e) is preferably a fluorinated diene having two CF₂=C< or having CF₂=C< and another polymerizable unsaturated group, wherein the length of the connecting group bonding both polymerizable unsaturated groups is within a specific range. A fluorinated diene wherein the length of the connecting group is out of the specific range is a crosslinkable fluorinated diene. The cyclopolymerizable fluorinated diene (e) is preferably a compound represented by the following formula (4) and having a connecting group with a specific length:

CF₂=CR³¹-Q¹-CR³²=CR³³R³⁴ (4)

In the formula (4), each of R³¹ and R³² which are independent of each other, represents a hydrogen atom, a fluorine atom, a chlorine atom, a methyl group or a trifluoromethyl group, each of R³³ and R³⁴ which are independent of each other, represents a hydrogen atom, a fluorine atom or a chlorine atom, and Q¹ represents a connecting group. Each of R³¹ and R³² which are independent of each other, is preferably a hydrogen atom, a fluorine atom or a chlorine atom, and each of R³³ and R³⁴ is preferably a fluorine atom.

Q¹ is a connecting group, and the length represented by the number of atoms (excluding atoms in the side chains) is from 2 to 4, preferably 2 or 3, most preferably 3. The connecting group preferably comprises a carbon atom or a carbon atom and an oxygen atom, and in a case where an oxygen atom is present, it is present preferably on one terminal or both terminals of the connecting group. The carbon atom preferably has a hydrogen atom, a fluorine atom, a chlorine atom, an alkyl group having at most 4 carbon atoms such as a methyl group, or a haloalkyl group having at most 4 carbon atoms such as a trifluoromethyl group or a trichloromethyl group, bonded thereto.

The cyclopolymerizable fluorinated diene (e) is preferably a compound represented by the following formula (4-1) or (4-2). The cyclopolymerizable fluorinated diene (e) is more preferably a compound represented by the following formula (4-1). The most preferred compound is a cyclopolymerizable fluorinated diene represented by the formula (4-1) (i.e. having no hydrogen atoms bonded to carbon atoms):

CF₂=CF-O-R⁴¹CR⁴²=CF₂ (4-1)

CF₂=CF-OC(R⁴³)₂O-CR⁴²=CF₂ (4-2)

wherein R⁴¹ represents an alkylene group, a fluoroalkylene group or a chlorofluoroalkylene group, having 1 or 2 carbon atoms except carbon atoms in the side chains, and having at most 4 carbon atoms in total, R⁴² represents a hydrogen atom, a fluorine atom or a chlorine atom, and R⁴³ represents a hydrogen atom, a fluorine atom, a chlorine atom, a fluoroalkyl group having at most 2 carbon atoms or a chlorofluoroalkyl group having at most 2 carbon atoms.

The following compounds may be mentioned as specific examples of the cyclopolymerizable fluorinated diene (e):

CF₂=CF-OCF₂CF₂-CF=CF₂

CF₂=CF-OCH₂CF₂-CF=CF₂

CF₂=CF-OCCI₂CF₂-CF=CF₂

CF₂=CF-OCF₂CF₂-CH=CF₂

CF₂=CF-OCF₂CF₂-CCl=CF₂

CF₂=CF-OCF₂CHF-CF=CF₂

CF₂=CF-OCF₂CFCl-CF=CF₂

CF₂=CF-OCF₂CF₂-CF=CFCl

CF₂=CF-OCF₂CF(CF₃)-CF=CF₂

CF₂=CF-OCF₂CF(CF₃)-CH=CF₂

CF₂=CF-OCF₂CF(CF₃) -CCl=CF₂

CF₂=CF-OC (CF₃) ₂CF₂-CF=CF₂

CF₂=CF-OCF₂-CF=CF₂

CF₂=CF-OCF(CF₃)-CF=CF₂

CF₂=CF-OCF₂O-CF=CF₂

CF₂=CH-OCF₂O-CH=CF₂

CF₂=CCl-OCF₂O-CCl=CF₂

CF₂=CF-OCH₂O-CF=CF₂

CF₂=CF-OCCl₂O-CF=CF₂

CF₂=CF-OC (CF₃)₂O-CF=CF₂

The fluoropolymer (A) comprises a homopolymer of one type, or a copolymer of two or more types, selected from the above fluoromonomers (a) to (e). As the case requires, a monomer other than the above monomers may be copolymerized with the above fluoromonomers (a) to (e). Said another monomer in this case is a non-crosslinkable monomer, and is usually a monoene. Said another monomer may, for example, be a fluoromonomer having no fluorine atom in a polymerizable unsaturated group, such as (perfluoroalkyl) vinyl ether, an olefin such as ethylene or propylene, a vinyl ether monomer such as alkyl vinyl ether, or an unsaturated carboxylate such as an alkyl acrylate or an alkyl methacrylate. In the case of using such another monomer, the amount of another monomer is preferably less than 50 mol%, particularly preferably less than 20 mol% to the entire monomers.

The fluoropolymer (A-1) obtained from the above monomers is a substantially linear polymer and is usually thermoplastic. Further, it is soluble in a solvent in many cases. In polymerization of the cyclopolymerizable fluorinated diene (e), one carbon atom in one of the two polymerizable unsaturated groups and one carbon atom in the other polymerizable unsaturated group are bonded to form a ring, and at the same time, each of two carbon atoms not participating in formation of the ring forms a bond, whereby a bivalent monomer unit is formed. Since the monomer unit formed from the cyclopolymerizable fluorinated diene (e) is bivalent, a linear polymer is formed from this monomer similarly to the case of a bivalent monomer unit formed from a monoene.

From each of the fluorinated methylene dioxolane monomer (b), the fluorinated dioxole monomer (c) and the cyclopolymerizable fluorinated diene (e), a polymer having a cyclic structure in its main chain is obtained. The main chain of the polymer obtained from a monomer having a polymerizable unsaturated group consists of a chain of carbon atoms. The carbon atoms in the main chain are carbon atoms in the polymerizable unsaturated group, and in a polymer of the cyclopolymerizable diene also, the main chain is formed from four carbon atoms in two polymerizable unsaturated groups. "Having a cyclic structure in its main chain" means that at least one of carbon atoms constituting the ring is a carbon atom in the main chain. As represented by the above structures of monomers, the ring is preferably a carbon ring having one or two oxygen atoms. In monomer units formed from the fluorinated methylene dioxolane monomer (b), one carbon atom in the dioxolane ring becomes a carbon atom in the main chain, and in the monomer units formed from the fluorinated dioxole monomer (c), two carbon atoms in the dioxole ring become carbon atoms in the main chain. In monomer units formed from the cyclopolymerizable fluorinated diene (e), two to four carbon atoms among four carbon atoms in the polymerizable unsaturated groups become carbon atoms in the ring. In a case where the connecting group Q¹ has an oxygen atom, a ring comprising an oxygen atom and carbon atoms is formed, and when the connecting group has only carbon atoms, a carbon ring is formed. Hereinafter, a carbon ring which may have an oxygen atom, including a dioxolane ring and a dioxole ring, will be referred to as an alicyclic ring.

The fluoropolymer (A) is preferably a fluoropolymer having an alicyclic ring in its main chain. Namely, each of the fluoropolymer (A-1) and the fluoropolymer (A-2) is preferably a fluoropolymer having an alicyclic ring in its main chain. The proportion of monomer units having an alicyclic ring to the entire monomer units in the fluoropolymer is preferably at least 20 mol%, particularly preferably at least 50 mol%.

As mentioned above, at least part of the fluoropolymer (A) is preferably a crosslinked fluoropolymer. The fluoropolymer (A-2) as a crosslinked fluoropolymer is preferably a polymer obtained by copolymerizing the above monomer forming a linear polymer and a monomer having at least two polymerizable unsaturated groups (and having no cyclopolymerizability). The monomer having at least two polymerizable unsaturated groups is preferably a crosslinkable fluorinated diene. In addition, a diene having no fluorine atoms or a polyene which may have a fluorine atom may also be used.

The crosslinkable fluorinated diene is preferably a compound represented by the following formula (5). Such a fluorinated diene is a diene which hardly undergoes cyclopolymerization since the length of the connecting group Q² is too short or too long. Accordingly, two polymerizable unsaturated groups are respectively bonded to other monomer molecules, thereby to form a crosslinked structure:

CF₂=CR⁵¹-Q²-CR⁵²=CR⁵³R⁵⁴ (5)

In the formula (5), each of R⁵¹ and R⁵² which are independent of each other, represents a hydrogen atom, a fluorine atom, a chlorine atom, a methyl group or a trifluoromethyl group, each of R⁵³ and R⁵⁴ which are independent of each other, represents a hydrogen atom, a fluorine atom or a chlorine atom, and Q² represents a connecting group. Each of R⁵¹ and R⁵² which are independent of each other, is preferably a hydrogen atom, a fluorine atom or a chlorine atom, and each of R⁵³ and R⁵⁴ is preferably a fluorine atom.

Q² is a connecting group, and its length represented by the number of atoms (excluding atoms in the side chains) is 1 or at least 5, preferably from 5 to 16, most preferably from 6 to 12. The connecting group preferably comprises a carbon atom or a carbon atom and an oxygen atom, and in a case where an oxygen atom is present, it is preferably present on one terminal or both terminals of the connecting group. The carbon atom preferably has a hydrogen atom, a fluorine atom, a chlorine atom, an alkyl group having at most 2 carbon atoms such as a methyl group, or a haloalkyl group having at most 2 carbon atoms such as a trifluoromethyl group or a trichloromethyl group, bonded thereto. The compound represented by the formula (5) is preferably a perfluoro compound, particularly preferably a compound represented by the following formula (5-1) (wherein n is an integer of from 4 to 10):

CF₂=CF-O (CF₂)ₙO-CF=CF₂ (5-1)

As the crosslinkable fluorinated diene, a crosslinkable fluorinated diene having another structure may further be used. For example, a crosslinkable fluorinated diene having the polymerizable unsaturated group in the above formula (5) substituted by another polymerizable unsaturated group-containing organic group may be mentioned.

The fine composite particles of the present invention, comprising fine inorganic nanometer-size particles, the surface of which is covered with the fluoropolymer (A), may be produced by polymerizing a fluoromonomer by seed polymerization in a polymerization system wherein fine inorganic nanometer-size particles are dispersed in an aqueous medium in the presence of a surfactant. By this method, the fluoromonomer is polymerized on the surface of the fine inorganic particles as seeds, and a layer of the fluoropolymer (A) is formed on the surface of the fine inorganic particles, whereby fine composite particles are obtained. The surfactant is coordinated to the surface of the fine inorganic particles to form micelles containing the fine inorganic particles, and the fluoromonomer is incorporated into the micelles and polymerized therein. Further, the surfactant is necessary also to keep such a state that the fine inorganic particles are stably dispersed in an aqueous medium.

Since the fine inorganic particles are usually hydrophilic, the hydrophobic fluoromonomer is less likely to be incorporated into the micelles. Further, since the affinity of the fine inorganic particles for the fluoromonomer in the micelles is low, the stability of the micelles into which the fluoromonomer is incorporated tends to be low. Further, since the fluoromonomer has high hydrophobicity as compared with a general monomer, favorable micelles are less likely to be formed by a general surfactant. In view of such problems, the surfactant is preferably a surfactant having a more highly hydrophobic group than usual. Further, it is preferred that the surface of the fine inorganic particles is preliminarily made to be hydrophobic. The degree of hydrophobicity on the surface of the fine inorganic particles is also preferably much higher than usual.

The treatment to make the surface of the fine inorganic particles hydrophobic is carried out preferably by modifying the surface of the fine inorganic particles with a coupling agent having a hydrophobic group. The coupling agent having a hydrophobic group may be a silane coupling agent or a titanium coupling agent, and is made of a silicon compound or a titanium compound, in which an organic group as a hydrophobic group and a hydroxyl group or a group which will be hydrolyzed to form a hydroxyl group are bonded. The group which will be hydrolyzed to form a hydroxyl group may, for example, be an alkoxy group, an acyl group or an amino group, and it is particularly preferably an alkoxy group having at most 4 carbon atoms. The hydrophobic group is preferably a long chain hydrocarbon group or a fluorinated hydrocarbon group-containing organic group (hereinafter referred to as a fluorinated hydrophobic group), and it may be an organic group having a polymerizable unsaturated group such as a methacryloyloxyalkyl group. The coupling agent is preferably a silane coupling agent. Hereinafter, a silane coupling agent having a fluorinated hydrophobic group will be sometimes referred to as a fluorine type silane coupling agent.

In the present invention, a coupling agent is preferably a silane coupling agent represented by the following formula (6), having a long chain hydrocarbon group or a fluorinated hydrophobic group as a hydrophobic group:

R⁶¹-(CH₂)ₚSi(R⁶²)ₖ(OR⁶³)₃₋ₖ (6)

In the formula (6), R⁶¹-(CH₂)ₚ represents a long chain hydrocarbon group or a fluorinated hydrophobic group, R⁶² represents an alkyl group having at most 4 carbon atoms, R⁶³ represents an alkyl group having at most 4 carbon atoms or an alkoxyalkyl group having at most 6 carbon atoms, p represents an integer of from 2 to 4, and k represents an integer of from 0 to 2. R⁶² is preferably a methyl group or an ethyl group, R⁶³ is preferably a methyl group or an ethyl group, p is preferably 2 or 3, and k is preferably 0 or 1. In a case where R⁶¹-(CH₂)ₚ is a long chain hydrocarbon group, the carbon number is preferably from 6 to 20.

The silane coupling agent represented by the formula (6) is particularly preferably a fluorine type silane coupling agent wherein R⁶¹-(CH₂)ₚ is a fluorinated hydrophobic group. In such a case, R⁶¹ represents a fluoroalkyl group, a fluoroalkyl group having an etheric oxygen atom between carbon atoms, or a group having such a fluoroalkyl group and a connecting group bonded. The fluoroalkyl group is preferably a straight chain perfluoroalkyl group having at least 4, particularly from 4 to 16, carbon atoms (hereinafter sometimes referred to as Rf group). The fluoroalkyl group having an etheric oxygen atom between carbon atoms is preferably a perfluoro group having an etheric oxygen atom between carbon atoms of a branched (preferred is a branch consisting of a trifluoromethyl group) or straight chain perfluoroalkyl group having at least 6, particularly from 6 to 20, carbon atoms, and having from 1 to 6 etheric oxygen atoms. The connecting group may, for example, be -COO-, -COS-, -CONH-, -SO₂NH- or -CH₂CH₂S-. The following Rf group-containing compounds may be mentioned as specific examples of the fluorine type silane coupling agent:

CF₃(CF₂)₃(CH₂)₂Si(OCH₃)₃

CF₃(CF₂)₅(CH₂)₂Si(OCH₃)₃

CF₃(CF₂)₇(CH₂)₂Si(OCH₃)₃

CF₃(CF₂) ₉(CH₂)₂Si(OCH₃)₃

CF₃(CF₂)₅(CH₂)₂Si(OC₂H₅)₃

CF₃(CF₂)₅(CH₂)₂Si(CH₃)(OCH₃)₂

CF₃(CF₂)₆COO(CH₂)₃Si(OCH₃)₃

CF₃(CF₂)₆CONH(CH₂)₃Si(OC₂H₅)₃

CF₃(CF₂)₆SO₂NH(CH₂)₃Si(OCH₃)₃

The method to modify the surface of the fine inorganic particles is usually a method of adding the coupling agent to a dispersion of the fine inorganic particles to allow the coupling agent to react with the fine inorganic particles. In a case of using a coupling agent having a hydrolyzable group such as a silane coupling agent, it is preferred to accelerate hydrolysis by a method of e.g. acidifying the dispersion. In a case of carrying out modification with a coupling agent having high hydrophobicity such as a fluorine type silane coupling agent, the liquid medium in the dispersion of the fine inorganic particles is preferably an organic solvent such as an alcohol. It is preferred to carry out surface modification by adding an aqueous acidic solution in a small amount to the dispersion of the fine inorganic particles in an organic solvent and then adding the coupling agent, followed by stirring with heating. The amount of the coupling agent to the fine inorganic particles is not particularly limited, but is preferably from 0.1 to 50 mass%, particularly preferably from 1 to 30 mass%.

Use of a surfactant is essential so as to diperse the fine inorganic particles in the aqueous medium and to make the fluoromonomer be polymerized on the surface of the fine inorganic particles. The surfactant is preferably an anionic surfactant or a nonionic surfactant. The hydrophilic group in the anionic surfactant may, for example, be a carboxylate, a sulfate, a phosphate or a phosphonate, and it is preferably a carboxylate. The counter ion may, for example, be an alkali metal ion or an ammonium ion. In the present invention, an ammonium salt of a carboxylic acid is particularly preferred. A metal ion when it remains in the fine composite particles, may have a bad influence over physical properties of the fluoropolymer, and it may be harmful depending upon the application (for example, remaining alkali metal ions in the material are unfavorable in an application to semiconductors).

As mentioned above, the surfactant is preferably a surfactant having a more highly hydrophobic group than usual. Such a surfactant may be a surfactant having a fluorinated hydrophobic group (hereinafter referred to as a fluorine type surfactant), and it is particularly preferably an anionic fluorine type surfactant or a nonionic fluorine type surfactant. The fluorine type surfactant is a surfactant having a fluorinated hydrocarbon group as a hydrophobic group, and such a hydrophobic group may be a fluorinated hydrocarbon group similar to the fluorinated hydrocarbon group in the compound represented by the above formula (6). The fluorine type surfactant is preferably a surfactant having an Rf group or a fluoroalkyl group having an etheric oxygen atom between carbon atoms, particularly preferably a nonionic surfactant having a salt of an Rf group-containing carboxylic acid or an Rf group and a polyoxyethylene chain. The fluorine type surfactant is particularly preferably an ammonium salt of an Rf group-containing carboxylic acid or an amine salt of an Rf group-containing carboxylic acid such as an alkanolamine salt. The following compounds may be mentioned as specific fluorine type surfactants having an Rf group (wherein q is an integer of at least 1):

CF₃(CF₂)₄COONH₄

CF₃(CF₂)₆COONH₄

CF₃(CF₂)₈COONH₄

CF₃(CF₂)₆COONH₂ (CH₂CH₂OH)₂

CF₃ (CF₂) ₃ (CH₂)₂COONH₄

CF₃(CF₂)₅(CH₂)₂COONH₄

CF₃(CF₂)₇(CH₂)₂COONH₄

CF₃ (CF₂)₉(CH₂)₂COONH₄

CF₃(CF₂)₅SO₃NH₄

CF₃(CF₂)₅SO₂N(CH₃)CH₂COONH₄

CF₃(CF₂)₆CON(CH₃)CH₂COONH₄

CF₃(CF₂)₆CON(CH₃)(CH₂CH₂O)_{q}H

The aqueous medium is preferably water alone, but water containing a small amount of a water-soluble organic solvent may be used. As mentioned above, as the fine inorganic particles, usually fine inorganic particles or modified fine inorganic particles dispersed in a liquid medium are used. In a case where the liquid medium is water, the liquid medium may be used as the aqueous medium as it is. In a case where the liquid medium is not water, the liquid medium is replaced with water. For example, in a case of fine inorganic particles dispersed in an organic solvent, water is added to the organic solvent dispersion, and then the organic solvent is removed to obtain a stable water dispersion. To carry out replacement with water, the organic solvent is preferably an organic solvent having a boiling point lower than the boiling point of water, and being water-soluble. For example, it is preferably a water-soluble alcohol such as methanol or ethanol. The method of removing the liquid medium to obtain a powder of the fine inorganic particles and then adding an aqueous medium to disperse the fine inorganic particles again, is not used usually since the fine inorganic particles may aggregate.

The method of producing a dispersion in which fine inorganic particles to the surface of which a surfactant is coordinated are dispersed in an aqueous medium, is not particularly limited. Usually, a method of adding a dispersion of fine inorganic particles into a surfactant-containing aqueous medium, or a method of adding a surfactant to a dispersion of fine inorganic particles, may, for example, be used. In a case where the liquid medium of the dispersion of the fine inorganic particles is an organic solvent, this organic solvent dispersion may be added to a surfactant-containing aqueous medium and then the organic solvent is removed for replacement with water, or a surfactant may be added to the organic solvent dispersion and then an aqueous medium is added thereto, and then the organic solvent is removed.

The amount of the surfactant is usually in accordance with the amount of the fine inorganic particles. However, it is not necessarily restricted by the amount of the fine inorganic particles, because the surface area varies depending upon the particles size of the fine inorganic particles. The amount is at least an amount with which stable micelles are formed, and an amount with which the amount of micelles containing no fine inorganic particles is as small as possible. Usually it is preferably from 10 to 75 mass%, particularly preferably from 20 to 50 mass% to the fine inorganic particles.

A fluoromonomer is added to the above obtained aqueous medium in which fine inorganic particles are dispersed, and the fluoromonomer is polymerized on the surface of the fine inorganic particles to obtain fine composite particles, the surface of which is covered with the fluoropolymer (A). The fluoromonomer is polymerized usually by radical polymerization. A radical generator is used as a polymerization initiator for radical polymerization. In the present invention, use of an oil-soluble radical generator is preferred as the radical generator. In a case where the fine inorganic particles covered with the non-fluorine type polymer as disclosed in the above document are produced by seed polymerization, a water-soluble radical generator is used. However, in a case of seed polymerization of the fluoromonomer, since the monomer is highly hydrophobic, a water-soluble radical generator is hardly dissolved in the fluoromonomer, and polymerization of the fluoromonomer may be difficult in some cases. However, when radicals generated from the radical generator dissolved in water are likely to transfer to micelles, it is considered that the fluoromonomer can be polymerized.

In the present invention, the radical generator is preferably an oil-soluble peroxide or azo compound. Further, as the case requires, an accelerating agent such as an amine may be used in combination. Specifically, the oil-soluble radical generator may, for example, be an organic peroxide such as a peroxycarbonate, a hydroperoxide, a diacyl peroxide or a ketone peroxide, or an azo compound such as 2,2'-azobis-(2,4-dimethylvaleronitrile). Further, a fluorine-containing peroxide such as polyfluorodiacyl peroxide may also be used. Preferably, an organic peroxide such as a peroxycarbonate, a hydroperoxide or a diacyl peroxide is used.

In a case of adding the fluoromonomer to the aqueous medium in which fine inorganic particles are dispersed, it is preferred that a polymerization initiator is preliminarily dissolved in the fluoromonomer, and the monomer solution is added to the aqueous medium. In a case where the fluoromonomer is a gas, it is not easy to preliminarily mix the polymerization initiator therewith, however, the polymerization initiator may be preliminarily dissolved in a small amount of a hydrophobic organic solvent and added to the aqueous medium. In the present invention, at least part of fluoromonomers is a liquid fluoromonomer. The polymerization initiator is preferably dissolved in the liquid fluoromonomer. In a case where a liquid non-fluorine type monomer is used in combination with the fluoromonomer, the polymerization initiator may be preliminarily dissolved in this non-fluorine type monomer.

It is required that the liquid fluoromonomer in which the polymerization initiator is dissolved is incorporated into the surface of the fine inorganic particles in the aqueous medium and polymerized there. In order that the fluoromonomer is incorporated into the surface of the fine inorganic particles, it is required that the fluoromonomer added to the aqueous medium is sufficiently brought into contact with the fine inorganic particles, and that the fluoromonomer is dispersed in the aqueous medium so that the amount of droplets of the fluoromonomer containing no fine inorganic particles is small and no droplets containing a large number of fine inorganic particles are formed. Accordingly, it is required that the fluoromonomer is dispersed in the aqueous medium in the form of sufficiently fine particles, and the specific means may, for example, be a dispersing means such as sufficiently vigorously stirring the aqueous medium to which the fluoromonomer is added so that the fluoromonomer is formed into fine particles, irradiating the aqueous medium with ultrasonic waves to disperse the fluoromonomer, or dispersing the fluoromonomer by a high pressure emulsifier. Particularly preferred is a means of irradiating the aqueous medium with ultrasonic waves with stirring for dispersion. When a hydrophobic layer such as a liquid fluoromonomer is present on the surface of the fine inorganic particles, a gaseous fluoromonomer is incorporated into the hydrophobic layer, and thus a special means to disperse a gaseous fluoromonomer is usually not required. Here, the step of dispersing the fluoromonomer in the aqueous medium is preferably carried out at a temperature at which the polymerization initiator is not reactive, and accordingly it is preferred to carry out dispersion with cooling when the polymerization temperature is low.

After the fluoromonomer is dispersed, polymerization of the fluoromonomer is carried out. The polymerization is carried out at a temperature of at least the reaction temperature of the polymerization initiator, that is, in a case of a radical generator, at a temperature of at least a temperature at which the radical generator undergoes cleavage to generate radicals. It is preferred to carry out polymerization at a temperature at which the half-life period of the radical generator is at a level of from 3 to 10 hours. The polymerization may be carried out under normal pressure, and may be carried out under elevated pressure or under reduced pressure. The polymerization temperature is not particularly limited, but is suitably from 0 to 100°C, preferably from 20 to 95°C. The polymerization temperature is particularly preferably from 30 to 80°C.

In a case of producing fine composite particles, the shells of which comprise the fluoropolymer (A) in a multi-layer structure, a multi-layer structure of the polymer can be formed by carrying out polymerization in multi-stages and changing the type of the monomer in each polymerization stage. "Changing the type of the monomer" includes to change the copolymerization proportion of monomers when a plurality of monomers are copolymerized. It is preferred to form a layer of the polymer on the surface of the fine inorganic particles by carrying out the polymerization of the monomer in the same method as mentioned above, and after completion of the first stage, the monomer is newly added to the aqueous medium to carry out polymerization in the same manner as in the first stage. In a case where the newly added monomer is a liquid monomer, the monomer in which the polymerization initiator is dissolved as mentioned above is dispersed in the aqueous medium so that it is formed into sufficiently fine particles, and the newly added monomer is made to be incorporated into the surface of the inorganic fine particles covered with the polymer, formed by the first stage polymerization to carry out polymerization thereby to form a second polymer layer. Fine inorganic particles having three or more polymer layers can be obtained by repeatedly carrying out polymerization similarly. It is preferred that the fine inorganic particles covered with the polymer, prior to formation of a new polymer layer, are stably dispersed in the aqueous medium. The dispersion stability tends to decrease when the size of the fine inorganic particles covered with the polymer becomes larger, and it tends to be difficult to newly carry out polymerization in an aqueous medium in which the fine inorganic particles covered with the polymer with low dispersion stability are dispersed. Accordingly, when fine composite particles having a large size are to be finally produced, they are produced preferably by increasing the thickness of the outermost polymer layer.

The size of the fine composite particles of the present invention is not particularly limited. However, since the fine composite particles are obtained by covering the surface of fine inorganic particles having a specific size with the fluoropolymer (A), when the size is represented by the proportion of the fine inorganic particles in the fine composite particles, the proportion of the fine inorganic particles in the fine composite particles is from 1 to 90 mass%, more preferably from 3 to 70 mass%. If the proportion exceeds 90 mass%, the surface of the fine inorganic particles will not sufficiently be covered with the fluoropolymer (A), and the fine composite particles are likely to aggregate, and the affinity with the organic polymer tends to be insufficient. Further, even if they are covered, the covering polymer is likely to be peeled. Further, if the proportion is less than 1 mass%, characteristics derived from the fine inorganic particles are hardly obtained when the fine composite particles are utilized.

In a case where the fluoropolymer (A) in the fine composite particles substantially comprises the fluoropolymer (A-2) alone, the proportion of the fine inorganic particles in the fine composite particles is preferably from 5 to 90 mass%, particularly preferably from 10 to 70 mass%. In a case where the fluoropolymer (A) in the fine composite particles comprises the fluoropolymer (A-1) and the fluoropolymer (A-2), the proportion of the fine inorganic particles in the fine composite particles is preferably from 1 to 70 mass%, particularly preferably from 3 to 50 mass%. The ratio of the fluoropolymer (A-1) and the fluoropolymer (A-2) in the fine composite particles is not particularly limited, however, the fluoropolymer (A-2) is contained preferably in such an amount that the proportion of the fine inorganic particles to the total of the fine inorganic particles and the fluoropolymer (A-2) is at most 90 mass%.

The fine composite particles of the present invention may be used for various applications as a molding material in the form of a dispersion in which they are dispersed in an aqueous medium or another liquid medium. Further, they may be used for various applications as a molding material in the form of a powder obtained by separating them from the liquid medium.

The dispersion in which the fine composite particles are dispersed in a liquid medium may be used, with another additive component dispersed or dissolved therein as the case requires, for applications to coating and cast molding as a coating agent. Said another additive component may, for example, be a binder such as a matrix polymer as mentioned hereinafter or a curable resin which can be a matrix polymer. The liquid medium is not limited to an aqueous medium used for production of the fine composite particles, and another liquid medium may be used. For example, by a solvent replacement method or a method of dispersing powdered fine composite particles in a liquid medium, dispersions employing various liquid mediums may be produced. The liquid medium is preferably a liquid medium having affinity with the polymer on the surface of the fine composite particles. In a case where the polymer on the surface of the fine composite particles is the fluoropolymer (A), it is preferably a highly hydrophobic liquid medium, such as a fluorine type solvent. Even when the liquid medium is a liquid medium in which the fluoropolymer is easily dissolved, there is no fear that the surface of the fine inorganic particles is exposed when the polymer on the surface of the fine composite particles is a crosslinked polymer.

A powder of the fine composite particles can be obtained by separating the fine composite particles from the aqueous medium in which the fine composite particles are dispersed obtained from the above method. As the case requires, washing or the like may be carried out to purify the fine composite particles. The powder of the fine composite particles can be used as various molding materials. In such a case, the proportion of the fine inorganic particles in the fine composite particles is preferably from 1 to 50 mass%, particularly preferably from 1 to 20 mass%. Further, in such a case, the polymer on at least the surface layer of the fine composite particles is a polymer which is not crosslinked in view of moldability, and it is particularly preferred that the most part of the polymer, except the layer in contact with the surface of the fine inorganic particles, comprises the fluoropolymer (A-1).

The powder of the fine composite particles may also be used as various molding materials in combination with another material. It is particularly preferably blended with a polymer and used as a molding material. The polymer (hereinafter referred to as a matrix polymer) is preferably the fluoropolymer (A-1) or a fluoropolymer of the same type, but is not limited thereto. In a molding material comprising the powder of the fine composite particles and the matrix polymer in combination, the proportion of the fine inorganic particles in the fine composite particles to the total of the fine composite particles and the matrix polymer is preferably from 0.1 to 30 mass%, particularly preferably from 1 to 20 mass%. To the molding material, various additives may be blended in addition to the fine composite particles and the matrix polymer, and their amount is selected in accordance with the type of the additives and the purpose of blending, and is not particularly limited.

Further, the proportion of the fine inorganic particles in the fine composite particles used for the above application is selected from 1 to 90 mass% in accordance with the ratio in amount of the fine composite particles and the matrix polymer. In a case where the main purpose of blending the fine composite particles with the matrix polymer is to uniformly blend the fine inorganic particles, it is preferred to use fine composite particles having a relatively high proportion of the fine inorganic particles. Further, in the fine composite particles having a relatively high proportion of the fine inorganic particles, substantially all the fluoropolymer (A) is preferably the fluoropolymer (A-2). The fine composite particles having a relatively high proportion of the fine inorganic particles are preferably fine composite particles having a proportion of the fine inorganic particles of from 30 to 90 mass%, particularly from 50 to 70 mass%.

The fluoropolymer as the above matrix polymer may, for example, be a general purpose fluoropolymer such as polytetrafluoroethylene (PTFE), a tetrafluoroethylene/perfluoroalkyl vinyl ether copolymer (PFA), a tetrafluoroethylene/hexafluoropropylene copolymer (FEP), polychlorotrifluoroethylene (PCTFE), polyvinylidene fluoride (PVDF), polyvinyl fluoride, an ethylene/tetrafluoroethylene copolymer (ETFE) or an ethylene/chlorotrifluoroethylene copolymer (ECTFE), or a thermoplastic fluorinated elastomer or a soft fluoropolymer.

Further, the powder of the fine composite particles may be blended with a fluorinated curable resin such as a fluorinated polyimide resin or a fluorinated epoxy resin. Further, it may also be blended with a fluoropolymer having units derived from a monomer such as the above fluorinated methylene dioxolane monomer (b), fluorinated dioxole monomer (c) or cyclopolymerizable fluorinated diene (e) i.e. a fluoropolymer having an alicyclic ring in its main chain. The fluoropolymer is preferably a thermoplastic fluoropolymer.

The powder of the fine composite particles may also be blended with a matrix polymer comprising a thermoplastic or curable polymer other than the fluoropolymer. Further, it may be blended with a curable resin which can be converted into a matrix polymer by curing. For example, a polyolefin, a polyester, a polyamide, a polyimide, a polyarylene ether, a polyarylene thioether, a polysulfone, an epoxy resin, a phenol resin or a curable polyimide resin may, for example, be mentioned.

The molding material comprising the powder of the fine composite particles and the matrix polymer may be formed into a molded product by various molding methods such as heat molding, heat pressure molding, extrusion and injection molding. In a case where at least part of the polymer in the fine composite particles is a crosslinked polymer, even in a molding method wherein the matrix polymer is melted for molding, the crosslinked polymer in the fine composite particles will not be melted, and there is little possibility that the surface of the fine inorganic particles in the fine composite particles is exposed and brought into contact with the melted matrix polymer. Thus, the fine composite particles function as a non-melting bulking agent even in melt molding, and a molded product which is free from aggregation or uneven distribution of the fine inorganic particles and in which the fine inorganic particles are uniformly monodispersed in the matrix polymer can be obtained.

Further, by using fine composite particles with a surface layer made of a polymer having functional groups, affinity with the matrix polymer can be improved, and even when the affinity of the matrix polymer for a polymer having no functional group on the surface of the fine composite particles is low, the affinity between both can be improved, and they can be uniformly mixed without phase separation of them. A polymer having functional groups may, for example, be a fluoropolymer (A) having units of the above fluorinated vinyl ether monomer (d) having a functional group such as -SO₂F or - COOR²⁵.

A polymer molded product obtained from the molding material containing the fine composite particles of the present invention (one comprising the fine composite particles or one comprising the fine composite particles and the matrix polymer) is a polymer molded product which can have a function derived from the fine inorganic particles. For example, blending of fine composite particles containing fine silica particles is effective for improvement in physical properties of the polymer molded product, such as improvement in rigidity and strength, decrease in the coefficient of thermal expansion and improvement in heat resistance. Blending of fine composite particles containing fine particles of e.g. zinc oxide, cerium oxide or titania can impart ultraviolet absorbing properties to the polymer molded product, and blending of fine composite particles containing fine particles of e.g. antimony-doped tin oxide or tin-doped indium oxide can impart infrared ray absorbing properties to the polymer molded product. Further, blending of fine composite particles containing fine particles of e.g. titania or zirconia can increase the refractive index of the polymer molded product, and blending of fine composite particles containing fine metal particles can increase the coefficient of thermal conductivity of the polymer molded product. One having a metal oxide containing a rare earth element such as YAG or a chalcogenide compound such as ZnS doped with copper, cerium, aluminum, europium or the like is known as a phosphor, and blending of fine composite particles containing fine inorganic particles made of such a phosphor makes the polymer molded product to have a function to absorb light emitted from blue LED or near ultraviolet LED and convert it to RGB light.

The matrix polymer is particularly preferably a fluoropolymer which is not crosslinked. Particularly, it is preferably a fluoropolymer having units derived from a monomer such as the above fluorinated olefin (a), fluorinated methylene dioxolane monomer (b), fluorinate dioxole monomer (c), fluorinate vinyl ether monomer (d) or cyclopolymerizable fluorinated diene (e). It is more preferably a fluoropolymer having units derived from the fluorinated methylene dioxolane monomer (b), fluorinated dioxole monomer (c) or cyclopolymerizable fluorinated diene (e) in an amount of at least 20 mol% (particularly at least 50 mol%) of the entire repeating units. In a case where the fluoropolymer contains other repeating units, the fluorinated olefin (a) such as tetrafluoroethylene or the fluorinated vinyl ether monomer (d) is preferred, and the fluorinated vinyl ether monomer (d) may be a compound having a functional group. Hereinafter, this fluorinated polymer will be referred to as a fluoropolymer (B). The fluoropolymer (B) is a polymer which has an alicyclic structure in its main chain, and thus has high transparency as compared with another fluoropolymer and is thereby known as a transparent fluororesin, and it is a fluoropolymer used for optical application also.

The fluoropolymer (A) in the fine composite particles and the fluoropolymer (B) as the matrix polymer are preferably substantial perfluoropolymers. Heretofore, it has been difficult to uniformly blend fine inorganic particles with a perfluoropolymer without aggregation. By blending the fine composite particles of the present invention, it becomes possible to uniformly blend fine inorganic particles with a perfluoropolymer without aggregation, and by blending of fine inorganic particles in a relatively small amount, characteristics by blending the fine inorganic particles can be obtained.

A perfluoropolymer and a fluoropolymer having a high fluorine content have excellent characteristics such as low dielectric characteristics (low dielectric constant, low dielectric loss tangent), electrical insulating properties and heat resistance as insulating materials, and are known particularly as insulating materials for high frequency. Accordingly, they are used as insulating materials for e.g. electronic circuit boards, LSI element boards, electronic components and wire coating. However, PTFE as a typical perfluoropolymer has low rigidity, a high coefficient of thermal expansion, etc. and has insufficient mechanical characteristics. In order to improve mechanical characteristics, it is required to blend e.g. an inorganic bulking agent such as glass fibers or silica in a relatively large amount, at the sacrifice of low electric characteristics. A material having the fine composite particles of the present invention blended with a fluoropolymer having a high fluorine content, particularly a perfluoropolymer, has such characteristics that the mechanical characteristics such as rigidity and the coefficient of thermal expansion are improved by blending of the fine inorganic particles in a relatively small amount, and thus the deterioration of low dielectric characteristics tends to be small. Further, deterioration of the original characteristics of the fluoropolymer, such as mechanical characteristics other than the above, electrical characteristics, moldability, processability, chemical stability and low water absorption properties tends to be small. Further, when the fluoropolymer (b) is used for optical application, optical characteristics such as transparency are less likely to be lowered, and characteristics by blending the fine inorganic particles are likely to be obtained.

The fine composite particles of the present invention containing fine silica particles have excellent characteristics particularly as a material for an electrical insulating material with a low dielectric constant. The powder of the fine composite particles of the present invention having a high proportion of the fluoropolymer (A) can be used as a molding material as it is, and may be molded into a sheet, a film or another molded product by e.g. hot pressure molding, extrusion, injection molding or the like. Further, the powder of the fine composite particles of the present invention may be blended with a perfluoropolymer such as a fluoropolymer (B) or a fluoropolymer having a high fluorine content to obtain a molding material, which is molded into a similar molded product. The amount of silica derived from the fine composite particles in such a molded product is preferably from 0.5 to 25 mass%, particularly preferably from 1 to 15 mass%, to the entire fluoropolymers. Such a molded product has excellent characteristics as an electronic circuit board. For example, the fine composite particles having a fluoropolymer (A) having an alicyclic structure in its main chain and a matrix comprising a fluoropolymer (B) are combined to form a molding material, from which a molded product useful for e.g. an electronic circuit board can be obtained.

Now, the present invention will be explained in further detail with reference to Examples. In the following Examples, '%' means mass% unless otherwise specified. The content of fine inorganic particles in fine composite particles is a content obtained from the weight of the residue after temperature increase of 600°C by thermogravimetric analysis (TGA). Further, materials used are as follows.
Fluoroalkylsilane A: C₆F₁₃CH₂CH₂Si(OCH₃)₃ (TSL 8257 manufactured by GE Toshiba Silcones).
Fluorine type surfactant A: C₈F₁₇CH₂CH₂COONH₄
PBVE: CF₂=CFOCF₂CF₂CF=CF₂, perfluoro(3-butenyl vinyl ether).
HMDVE: CF₂=CFO(CF₂)₆OCF=CF₂, perfluoro(hexamethylene divinyl ether).
IPP: ((CH₃)₂CHOCOO)₂, diisopropylperoxydicarbonate.
PBTHF: perfluoro(2-butyltetrahydrofuran).
TFE: tetrafluoroethylene

### EXAMPLES

### EXAMPLE 1

To a mixed liquid comprising 3.0 g of an organosilica sol (SiO₂ content 20%, ethanol solution, manufactured by Catalysts & Chemicals Industries Co., Ltd.) having a spherical silica with an average particle size of 20 nm dispersed therein and 0.04 g of 2% hydrochloric acid, 0.233 g of fluoroalkyl silane A was added with stirring. After dropwise addition, the temperature was increased to 60°C, followed by stirring for 3 hours to prepare a silica sol containing fine surface modified silica particles.

Then, the entire amount of the above obtained silica sol was dropwise added to an aqueous solution having 0.75 g of a fluorine type surfactant A dissolved in 150 g of deionized water with stirring. Ethanol was distilled off under reduced pressure by using an evaporator, and then a mixed liquid comprising 0.74 g of PBVE, 0.037 g of HMDVE and 0.007 g of IPP as a polymerization initiator was added, followed by irradiation with ultrasonic waves for 5 minutes with stirring for sufficient dispersion. A small amount of sodium hydrogen phosphate was added to adjust the pH to from 4 to 5, and then the dispersion was put in a 200 cc glass reactor, and polymerization was carried out at 40°C for 20 hours with stirring.

After cooling, the content was taken out and frozen for agglomeration. The agglomerate was washed with methanol and vacuum dried at 100°C to obtain 1.05 g of a white powder. The obtained fine composite particles had a silica content of 65%. Further, this powder was confirmed to be uniformly dispersed in PBTHF.

### EXAMPLE 2

Polymerization of PBVE/HMDVE was carried out using the same materials in the same method under the same conditions as in Example 1. Polymerization was carried out at 40°C for 20 hours, followed by cooling to room temperature, and then a mixed liquid comprising 7.6 g of PBVE and 0.04 g of IPP was added to the reactor, followed by irradiation with ultrasonic waves with stirring to obtain a uniform solution. Then, the temperature was increased to 40°C again, and reaction was carried out for 20 hours with stirring. Then, by means of agglomeration and drying steps, 5.5 g of a white powder was obtained.

The obtained fine composite particles are considered to be such fine particles that the surface of fine silica particles with a diameter of 20 nm is covered with two fluororesin layers, the inner layer is made of a polymer of PBVE crosslinked with HMDVE, and the outer layer is made of a homopolymer of PBVE. The fine composite particles had a silica content of 8% and were confirmed to be uniformly dispersed in PBTHF.

The obtained powder was formed into a film by using a press molding machine at 270°C to produce a film with a thickness of about 250 µm. The film had favorable transparency, which suggests that fine silica particles were uniformly dispersed. The refractive index of D line was measure by using an Abbe refractometer and found to be 1.353. Further, using this sample, the dielectric constant/dielectric loss tangent was measured and found to be 2.32/0.002 at 10 MHz and 2.30/0.005 at 1 GHz, and the sample was confirmed to have low dielectric characteristics. Tensile strength and elongation were measured and as a result, the elastic modulus was 1,700 MPa and was higher than the elastic modulus of 1,400 MPa of the PBVE polymer as a base fluororesin, and it was found that hardness was increased by use of silica in a very small amount in combination. Further, the yield stress was 38 MPa, and the breaking extension was 5%, it was confirmed that the toughness was also maintained.

### EXAMPLE 3

Polymerization of PBVE was carried out using the same materials as in Example 1 except that HMDVE was not used and 8.30 g of BVE and 0.042 g of IPP were used, in the same method under the same conditions, to obtain 6.23 g of a white powder. The obtained fine composite particles had a silica content of 7%.

Using the obtained powder, press molding was carried out at 270°C to prepare a film, and the dielectric constant/dielectric loss tangent was measured and found to be 2.27/0.002 at 10 MHz and 2.25/0.005 at 1 GHz, and the film was confirmed to have low dielectric characteristics. The tensile strength and elongation were measured and as a result, the elastic modulus was 1,730 MPa, and the film broke at an extension of 1.7%.

### EXAMPLE 4

To a mixed liquid comprising 0.865 g of an organotitania sol (TiO₂ content 45%, isopropanol solution, manufactured by TAYCA CORPORATION) having titania with an average particle size of 22 nm dispersed therein and 0.015 g of 2% hydrochloric acid, 0.072 g of fluoroalkyl silane A was added with stirring. After dropwise addition, the temperature was increased to 60°C, followed by stirring for 4 hours to prepare an organosol containing fine titania particles, the surface of which was modified.

Then, the above organotitania sol was dropwise added to an aqueous solution having 0.85 g of fluorine type surfactant A dissolved in 170 g of deionized water with stirring. Isopropanol was distilled off under reduced pressure by using an evaporator, and a mixed liquid comprising 0.74 g of PBVE, 0.030 g of HMDVE and 0.007 g of IPP as a polymerization initiator was added, followed by irradiation with ultrasonic waves for 5 minutes with stirring for sufficient dispersion. A small amount of sodium hydrogen phosphate was added to adjust the pH to 4.2, and then the dispersion was put in a 200 cc glass reactor, and polymerization was carried out at 40°C for 20 hours with stirring. Then, after cooling, 3.4 g of PBVE and 0.034 g of IPP were further added, followed by irradiation with ultrasonic waves with stirring to obtain the uniform solution, and reaction was carried out at 40°C for 20 hours again.

After cooling, the content was taken out and frozen for agglomeration. The agglomerate was washed with methanol and vacuum dried at 100°C to obtain 1.05 g of a white powder. The obtained fine composite particles had a titania content of 5%. The obtained powder was press molded at 270°C to produce a film. The dielectric constant/dielectric loss tangent of the obtained film was measured and found to be 2.94/0.007 at 10 MHz and 2.91/0.001 at 1 GHz, and it was found that the dielectric constant was higher than that of the base resin (2.1) while maintaining a low dielectric loss tangent value. Further, the obtained powder was confirmed to be uniformly dispersed in PBTHF.

### EXAMPLE 5

4.0 g of a sol (SrBaTiO₃ content 10%) having SrBaTiO₃ with an average particle size of 80 nm dispersed in a deionized water adjusted to have a pH of 8.4, 0.02 g of fluorine type surfactant A and 0.144 g of fluoroalkyl silane A were mixed and reacted at 80°C for 10 hours. Then, the reaction liquid was dispersed in a mixed liquid comprising a 0.5 mass% aqueous solution of fluorine type surfactant A and 1.2 g of 2% hydrochloric acid. A mixed liquid comprising 3.6 g of PBVE and 0.002 g of IPP as a polymerization initiator was added, followed by irradiation with ultrasonic waves for 5 minutes with stirring for sufficient dispersion. A small amount of sodium hydrogen phosphate was added to adjust the pH to 7.0, and the dispersion was put in a 200 cc glass reactor, and polymerization was carried out at 40°C for 20 hours with stirring.

After cooling, the content was taken out and frozen for agglomeration. The agglomerate was washed with methanol and vacuum dried at 100°C to obtain 2.15 g of a white powder. The obtained fine composite particles have a titania content of 5%. The obtained powder was press molded at 270°C to produce a film. The dielectric constant/dielectric loss tangent of the obtained film was measured and found to be 3.04/0.001 at 10 MHz and 3.05/0.001 at 1 GHz, and it was found that the dielectric constant was higher than the dielectric constant (2.1) of the base resin, while maintaining a low dielectric loss tangent value. Further, the obtained powder was confirmed to be uniformly dispersed in PBTHF.

### EXAMPLE 6

The fine composite particles obtained in Example 2 was mixed with a powder of a PBVE polymer and pressure molded at 320°C to prepare a film with a thickness of 250 µm. The film was translucent and had a silica content of 4.5%. Using this sample, the dielectric constant/dielectric loss tangent was measured and found to be 2.26/0.001 at 10 MHz and 2.25/0.002 at 1 GHz, and the sample was confirmed to have low dielectric characteristics. Tensile strength and elongation were measured and as a result, the elastic modulus was 1,600 MPa and higher than the elastic modulus of 1,400 MPa of the PBVE polymer as a base fluororesin, and it was found that hardness was increased by the presence of fine silica particles in a very small amount. Further, the yield stress was 40 MPa, the breaking extension was 10%, and it was confirmed that toughness was also maintained.

### INDUSTRIAL APPLICABILITY

According to the production method of the present invention, fine core/shell composite particles comprising fine inorganic nanometer-size particles as cores and a highly hydrophobic fluoropolymer as shells are obtained. A powder comprising the obtained fine composite particles is excellent as a molding material for production of a fluoropolymer molded product in which fine inorganic particles are uniformly dispersed, and effects of addition of fine inorganic particles can be obtained even when the content of the fine inorganic particles in the molded product is relatively low. Similarly, the powder comprising the obtained fine composite particles can be used as an additive for various polymer materials, and a molding material containing such a powder is free from defects due to blending of an additive in a large amount, since the addition amount required to obtain effects of addition of fine inorganic particles can be reduced.

## Claims

1. Fine composite particles comprising fine inorganic nanometer-size particles, the surface of which is covered with a fluoropolymer (A), wherein the fluoropolymer (A) is a fluoropolymer having units derived from a fluoromonomer having a polymerizable unsaturated group in which a carbon atom has a fluorine atom bonded thereto, and the proportion of the fine inorganic particles in the fine composite particles is from 1 to 90 mass%.

2. The fine composite particles according to Claim 1, wherein the fluoropolymer (A) is a fluoropolymer having units derived from a fluoromonomer having a polymerizable unsaturated group represented by CF₂=C< or -CF=CR-(wherein R represents a fluorine atom, a fluoroalkyl group or a fluoroalkoxy group).

3. The fine composite particles according to Claim 1 or 2, wherein the fluoropolymer (A) has a fluorine content of from 50 to 76 mass%.

4. A method for producing fine composite particles comprising fine inorganic nanometer-size particles, the surface of which is covered with the following fluoropolymer (A), which comprises polymerizing a fluoromonomer by seed polymerization in a polymerization system wherein fine inorganic nanometer-size particles are dispersed in an aqueous medium in the presence of a surfactant:
fluoropolymer (A): a fluoropolymer having units derived from a fluoromonomer having a polymerizable unsaturated group in which a carbon atom has a fluorine atom bonded thereto.

5. The method for producing fine composite particles according to Claim 4, wherein fine inorganic particles, the surface of which is preliminarily modified with a coupling agent having a fluorinated hydrophobic group, are used.

6. The method for producing fine composite particles according to Claim 4 or 5, wherein the surfactant is a surfactant having a fluorinated hydrophobic group.

7. The method for producing fine composite particles according to Claim 4, 5 or 6, wherein at least part of the fluoromonomer is a crosslinkable fluoromonomer.

8. The method for producing fine composite particles according to Claim 4, 5, 6 or 7, wherein in the polymerization system, a fluoromonomer at least part of which is a crosslinkable fluoromonomer is polymerized, and then a fluoromonomer containing substantially no crosslinkable fluoromonomer is polymerized.

9. The method for producing fine composite particles according to any one of Claims 4 to 8, wherein the fluoromonomer having a polymerizable unsaturated group is a fluoromonomer having a polymerizable unsaturated group represented by CF₂=C< or -CF=CR- (wherein R represents a fluorine atom, a fluoroalkyl group or a fluoroalkoxy group).

10. A molding material containing a powder of the fine composite particles as defined in Claim 1, 2 or 3.

11. A molding material containing a powder of the fine composite particles as defined in Claim 1, 2 or 3, and a thermoplastic polymer or a curable resin.

12. A molding material containing a powder of the fine composite particles as defined in Claim 1, 2 or 3, and a thermoplastic fluoropolymer.

13. A molded product obtained by molding the molding material as defined in Claim 10, 11 or 12.
